# EUROPÄISCHE PATENTSCHRIFT

(11) **EP 2 267 327 B1**
(45) Veröffentlichungstag und Bekanntmachung des Hinweises auf die Patenterteilung: **03.09.2014**
(21) Anmeldenummer: 10166319.3
(22) Anmeldetag: 17.06.2010
(51) Int. Cl.: F16D 3/38

(54) **Gelenkgabel aus Faserverbundwerkstoffen**
Joint yoke made of fibrous compound materials
Fourche articulée en matières actives composites fibreuses

(30) Priorität: 23.06.2009 DE 102009026013
(43) Veröffentlichungstag der Anmeldung: 29.12.2010
(73) Patentinhaber: Technische Universität Darmstadt, 64289 Darmstadt (DE)
(72) Erfinder: Schürmann, Helmut, 67133 Maxdorf (DE)
(74) Vertreter: Katscher Habermann Patentanwälte

(56) Entgegenhaltungen:
- DE-A1- 3 321 349
- FR-A1- 2 487 933
- FR-A1- 2 918 134
- GB-A- 2 372 086

## Beschreibung

Die Erfindung betrifft eine Gelenkgabel aus Faserverbundwerkstoffen, die insbesondere für Kreuzgelenke geeignet ist, mit zwei beabstandet zueinander, im Wesentlichen parallel angeordneten Gelenkarmen, die jeweils ein Bolzenauge zur Aufnahme eines Bolzens eines Gelenkkreuzes aufweisen.

In Wellen-Antriebssträngen von Maschinen und Fahrzeugen werden üblicherweise Gelenke angeordnet, um eine ausreichende Winkelbeweglichkeit des Antriebsstrangs sicher zu stellen. Mit dem Gelenk sollen die benachbarten Abschnitte des Antriebsstrangs biegemomentenfrei miteinander verbunden und Verzwängungen vermieden werden.

Kreuzgelenke mit zwei senkrecht zueinander angeordneten und an einem gemeinsamen Gelenkkreuz gelagerten Gelenkgabeln können oftmals große Winkeländerungen zwischen jeweils angrenzenden Wellenabschnitten des Antriebsstrangs ausgleichen. Aus diesem Grund werden insbesondere bei Lastkraftwagen Kreuzgelenke in den Antriebssträngen angeordnet, da auf Grund von großen Einfederungsdifferenzen zwischen einem leeren und einem beladenen Zustand des Lastkraftwagens besonders große Winkeländerungen ausgeglichen werden müssen.

Die Gelenkgabeln müssen insbesondere im Bereich der Bolzenaugen sehr große mechanische Beanspruchungen durch hohe Drehmomentstöße und Querbeschleunigungen aushalten können. Aus diesem Grund werden die aus der Praxis bekannten Gelenkgabeln nahezu ausschließlich aus metallischen Werkstoffen geschmiedet oder gegossen. Fertigungsbedingt weisen die mit den üblichen metallverarbeitenden Verfahren hergestellten Gelenkgabeln Toleranzen und Ungenauigkeiten auf, die während des Betriebs und insbesondere bei hohen Drehzahlen zu störenden Vibrationen und Geräuschen führen. Um diese nachteiligen Eigenschaften der Gelenkgabeln mindern oder vermeiden zu können, müssen die Gelenkgabeln nach deren Anfertigung in einem anschließenden Wuchtvorgang mittels geeigneter Wuchtgewichte individuell ausgewuchtet werden, wodurch der Herstellungsaufwand zusätzlich erhöht wird.

Um das Kreuzgelenk und damit auch den Wellen-Antriebsstrang mit einem möglichst geringen Gewicht herstellen zu können ist es bereits bekannt, sowohl einzelne Abschnitte des Wellen-Antriebsstrangs als auch das Kreuzgelenk teilweise oder vollständig aus geeigneten Faserverbundwerkstoffen herzustellen.

Die Fertigung einer Gelenkgabel aus Faserverbundwerkstoffen ist sehr aufwendig und mit hohen Kosten verbunden. Aufgrund einer oftmals komplexen Formgebung in Verbindung mit hoher mechanischer Beanspruchung der Gelenkgabel werden Faserwickeltechniken eingesetzt. Oftmals können nur wenige Faserfäden gleichzeitig gewickelt werden, weshalb lange Fertigungsdauern kaum vermieden werden können. Um während des Wickelns die einzelnen Faserfäden straff auf den Wickelkern ablegen und positionieren zu können, müssen üblicherweise geodätische Pfade, beziehungsweise Wickelverläufe eingehalten werden. Der Faserverlauf wird in diesen Fällen maßgeblich durch die Formgebung der Gelenkgabel vorgegeben, so dass die Faserorientierung oftmals nicht im Hinblick auf die erwartete mechanische Beanspruchung optimiert werden kann. Um dennoch eine ausreichende mechanische Belastbarkeit der aus Faserverbundwerkstoffen hergestellten Gelenkgabel zu ermöglichen, werden oftmals ein erheblicher Fertigungsaufwand in Kauf genommen und die Abmessungen beziehungsweise die Wanddicken der Gelenkgabel vorsorglich überdimensioniert, so dass die zur Herstellung der Gelenkgabel verwendete Menge an Faserverbundwerkstoffen zunimmt und die Herstellungskosten und das Gewicht der Gelenkgabel steigen. Aus den vorangehend genannten Gründen konnten sich Gelenkgabeln aus Faserverbundwerkstoffen bislang nicht in der Praxis durchsetzen.

FR 2,918,134 A1 offenbart ein Gelenkgabel nach dem Oberbegriff des Anspruchs 1.

Es wird als eine Aufgabe der Erfindung angesehen, eine Gelenkgabel insbesondere für Kreuzgelenke so auszugestalten, dass die Gelenkgabel möglichst einfach, rasch und mit hoher Genauigkeit herstellbar ist. Zudem wäre es vorteilhaft, wenn die Orientierung einzelner Fasern im Hinblick auf die erwartete mechanische Beanspruchung der Gelenkgabel vorgegeben werden kann.

Diese Aufgabe wird erfindungsgemäß dadurch gelöst, dass die Gelenkgabel zwei gesondert herstellbare Gabelhälften aufweist, die jeweils einen Befestigungsbereich zur Festlegung an einem Endbereich einer Welle aufweisen. Die beiden Gabelhäften können auf diese Weise nicht nur in einfacher Weise mit den üblichen Faserwickeltechniken hergestellt werden, sondern beispielsweise auch mit Pressverfahren oder Injektionsverfahren, die zur Bearbeitung vorgefertigter Faserverbundwerkstücke oder Faserverbundlaminate geeignet sind. Derartige Press- oder Injektionsverfahren ermöglichen im Vergleich zu den Faserwickelverfahren eine sehr rasche und kostengünstige Herstellung der Gabelhälften. Die Orientierung der Fasern in dem Faserverbundmaterial kann nahezu beliebig vorgegeben und an die erwartete mechanische Beanspruchung der Gelenkgabel angepasst werden. Im Gegensatz zu dem Faserwickelverfahren lassen sich in einfacher Weise auch unterschiedliche Wanddicken einzelner Abschnitte der Gabelhälften, beziehungsweise der Gelenkgabel ermöglichen, was bei den Faserwickelverfahren nur durch Unterbrechung des Wickelns und einer Einfütterung von Faserhalbzeugen möglich ist. Darüber hinaus können bei den aus der Praxis bekannten Pressverfahren auch thermoplastische Materialien im Zusammenhang mit den Faserverbundwerkstoffen verwendet werden.

Vorzugsweise ist vorgesehen, dass jede Gabelhälfte einen Gabelarm aufweist. Die beiden Gabelhälften können eine spiegelsymmetrische oder eine identische Formgebung aufweisen. Im Falle einer identischen Formgebung wird die Herstellung der Gelenkgabeln erleichtert, da lediglich ein Formwerkzeug für beide Gabelhälften erforderlich ist. Da die Gelenkgabel aus zwei symmetrischen oder identischen Gabelhälften zusammengesetzt werden kann, werden Unwuchten minimiert.

Um eine einfache und zuverlässige Befestigung der Gabelhälften in dem Endbereich der zugeordneten Welle zu erleichtern, ist vorgesehen, dass der Befestigungsbereich jeder Gabelhälfte einen an die Abmessungen des Endbereichs der Welle angepassten Hohlzylinderabschnitt aufweist. Die beiden Befestigungsbereiche der zwei Gabelhälften, die eine Gelenkgabel bilden, ergänzen sich zweckmäßiger Weise zu einem den Endbereich der Welle umgebenden Hohlzylinder. In diesem Fall können die Befestigungsbereiche aus Halbschalen bestehen, deren Abmessungen an den Endbereich der Welle angepasst sind.

Der Endbereich der Welle kann dabei durch einen Endabschnitt der Welle oder durch einen auf die Welle aufgesetzten Anschlussflansch, bzw. ein Anschluss- und Befestigungselement gebildet werden. Der Endbereich der Welle muss nicht notwendigerweise eine axialsymmetrische Umfangskontur aufweisen. Es sind auch radialsymmetrische oder nicht-rotationssymmetrische Umfangskonturen denkbar.

Um ein unerwünschtes Verdrehen der Gelenkgabel relativ zu der daran anschließenden Welle zusätzlich vermeiden zu können ist vorgesehen, dass der Befestigungsbereich jeder Gabelhälfte eine Polygonhalbschale aufweist. Die der Welle zugewandte Polygonkontur der Polygonhalbschale ist dabei an eine entsprechend ausgebildete Umfangskontur des Endbereichs der Welle angepasst, so dass in Umfangsrichtung ein formschlüssiger Eingriff zwischen jeder Gabelhälfte und damit auch zwischen der daraus zusammengefügten Gelenkgabel und dem Endbereich der Welle gewährleistet ist.

Um die Gelenkgabel in axialer Richtung an dem Endbereich der Welle festlegen zu können ist vorgesehen, dass die beiden Gabelhälften mittels eines die Befestigungsbereiche der beiden Gabelhälften mindestens bereichsweise umgreifenden Spannrings kraftschlüssig an dem Endbereich der Welle festlegbar sind. An Stelle eines Spannrings können auch andere geeignete Mittel, bzw. Vorrichtungen zur Festlegung der Gabelhälften verwendet werden, die eine kraft- oder formschlüssige Festlegung der Gabelhälften ermöglichen. Die Gabelhälften können auch im Bereich des Befestigungsbereichs ausschließlich oder zusätzlich mit der Welle und gegebenenfalls mit dem umgebenden Spannring verklebt, vernietet oder verschraubt sein.

Vorzugsweise ist vorgesehen, dass die Befestigungsbereiche der Gabelhälften einen Presssitz für die Gelenkgabel an dem Endbereich der Welle bilden, der eine werkstoffgerechte und langzeitbelastbare Befestigung, beziehungsweise Festlegung an dem Endbereich der Welle gewährleisten kann.

Gemäß einer besonders vorteilhaften Ausgestaltung des Erfindungsgedankens ist vorgesehen, dass jede Gabelhälfte als Faserverbund-Biegeträger ausgestaltet ist, wobei in Randbereichen des Gabelarms Gurte mit vorwiegend unidirektionaler Faseranordnung ausgebildet sind. Durch die Ausgestaltung der Gabelarme als Faserverbund-Biegeträger können mit geringem Materialeinsatz hohe Querkräfte aufgenommen werden, die über die vorzugsweise aus Faserbündeln gebildeten Gurte aufgenommen und verteilt werden können. Die Gurte können auch aus vorgefertigten Faserbündeln oder anderen Fasern, beziehungsweise aus anderen Materialien bestehen und während der Herstellung der Gabelhälften in diese eingebettet werden.

Um die Festigkeit einer Gabelhälfte zu erhöhen ist vorgesehen, dass die Gurte einer Gabelhälfte mittels Fasern miteinander kraftübertragend verbunden sind. Einzelne Fasern können dabei im Wesentlichen parallel angeordnet die Gurte einer Gabelhälfte enganliegend umschlingen. Es können auch verschieden ausgerichtete Fasern jeweils im Bereich der Gurte verankert sein und zusätzlich zu einer hochfesten und formstabilen Verbindung der Gurte in einer Gabelhälfte eine vorteilhafte Ausrichtung der einzelnen Fasern insbesondere im Bereich des Bolzenauges ermöglichen. Es können auch Laminate mit überkreuzend angeordneten Scharen parallel ausgerichteter Fasern verwendet werden.

Um die Festigkeit und Formstabilität der Gabelhälften im Bereich der Bolzenaugen zu erhöhen ist vorgesehen, dass ein Gurt oder mehrere Gurte einer Gabelhälfte schlaufenförmig um das Bolzenauge geführt und in Randbereichen des Gabelarms verankert sind. Es ist ebenfalls denkbar, dass einzelne Fasern oder Faserbündel schlaufenförmig um das Bolzenauge geführt und in Randbereichen des Gabelarms verankert sind. Sofern in den Randbereichen des Gabelarms Gurte verlaufen können die schlaufenförmig um das Bolzenauge verlegten Fasern oder Gurtabschnitte auch mit den in den Randbereichen des Gabelarms angeordneten Gurten, beziehungsweise Gurtabschnitten verbunden und dort verankert sein. Vorzugsweise ist vorgesehen, dass ein Gurt oder mehrere Gurte das Bolzenauge vollständig umschlingen, um einen Presssitz des Lagers zu gewährleisten.

Nachfolgend werden Ausführungsbeispiele des Erfindungsgedankens näher erläutert, die in der Zeichnung dargestellt sind. Es zeigt:
Figur 1 eine schematische Darstellung einer Gelenkgabel mit zwei Gabelhälften, die mittels eines Spannrings an einem Endbereich einer Welle festgelegt sind,
Figur 2 die in Figur 1 dargestellte Gelenkgabel in auseinander gezogener Darstellung,
Figur 3 eine schematische Darstellung einer Anordnung von Fasern und Gurten eines Faserverbundmaterials in einem Bereich um ein Bolzenauge in einer Gabelhälfte und
Figur 4 eine schematische Darstellung gemäß Figur 3, wobei ein abweichender Verlauf des Gurts und der Fasern abgebildet ist.

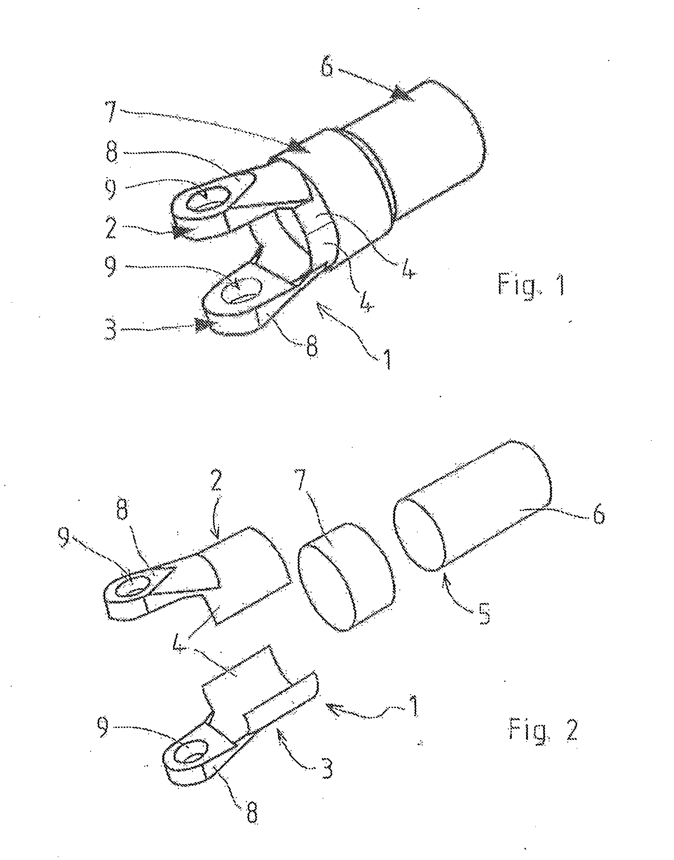

Die in den Figuren 1 und 2 schematisch dargestellte Gelenkgabel 1 besteht aus zwei Gabelhälften 2, 3, die bei dem abgebildeten Ausführungsbeispiel eine identische Formgebung aufweisen. Jede Gabelhälfte 2, 3 weist einen im Querschnitt halbkreisförmigen hohlzylindrischen Befestigungsbereich 4 auf. Die beiden Befestigungsbereiche 4 der eine Gelenkgabel 1 bildenden Gabelhälften 2, 3 können zu einem Hohlzylinder zusammengefügt und in einem Endbereich 5 einer Welle 6 eines Antriebsstrangs festgelegt werden. Zu diesem Zweck werden die beiden Befestigungsbereiche 4 eng anliegend in dem Endbereich 5 angeordnet, so dass die Befestigungsbereiche 4 den Endbereich 5 der Welle 6 umgeben und mittels eines Spannrings 7 fixiert werden können.

Der Spannring 7 wird nachträglich über die Befestigungsbereiche 4 der Gabelhälften 2, 3 aufgeschoben oder beispielsweise durch Umwickeln oder Umgreifen der Befestigungsbereiche 4 mit einem geeigneten Material erzeugt. Die Befestigungsbereiche 4 können zusätzlich mit dem Endbereich 5 der Welle 6 und/oder dem die beiden Befestigungsbereiche 4 umgebenden Spannring 7 verklebt, vernietet, verschraubt oder in anderer Weise kraft- oder formschlüssig verbunden sein.

Da die beiden Gabelhälften 2, 3 keinerlei Hinterschneidungen aufweisen, kann jede Gabelhälfte 2, 3 mittels aus der Praxis bekannter Pressverfahren aus vorgefertigten Faserverbundwerkstoffen oder Faserverbundlaminaten hergestellt werden. Als Fasermaterial können alle geeigneten organischen Fasern wie beispielsweise Aramid oder Polyamid sowie alle anorganischen Fasern wie beispielsweise Glasfasern, Basaltfasern, Borfasern, Kohlenstofffasern oder Metallfasern zur Anwendung kommen. Als Matrixmaterial des Faserverbunds können geeignete Kunststoffe oder Metalle verwendet werden. Im Hinblick auf eine einfache Herstellung, ein geringes Gewicht und eine hohe mechanische Belastbarkeit erscheinen duroplastische Kunststoffe wie beispielsweise Epoxidharze oder thermoplastische Kunststoffe wie beispielsweise Polyamid besonders geeignet.

Jede Gabelhälfte 2, 3 weist einen Gabelarm 8 und ein darin angeordnetes Bolzenauge 9 auf. Die beiden Bolzenaugen 9 der einander zugeordneten Gabelhälften 2, 3 einer Gelenkgabel 1 dienen zur Aufnahme eines Bolzens eines Gelenkkreuzes, mit welchem zwei Gelenkgabeln 1 miteinander verbunden werden können.

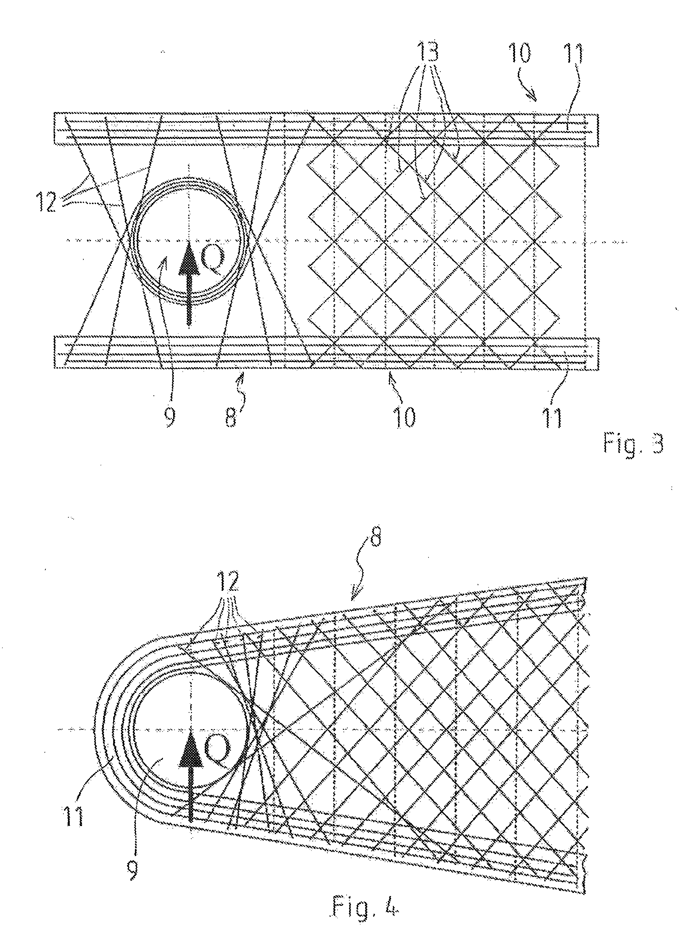

Um die Festigkeit und Formstabilität des Gabelarms 8 im Bereich um das Bolzenauge 9 zu erhöhen, können in Randbereichen 10 des Gabelarms 8 Gurte 11 aus Faserbündeln verlaufen, so dass der Gabelarm 8 als Faserverbund-Biegeträger ausgestaltet ist (Fig. 3). Einzelne Fasern 12 können schlaufenförmig um das Bolzenauge 9 verlegt, beziehungsweise angeordnet werden, um insbesondere in einem Bereich um das Bolzenauge 9 einen hochfesten und äußerst formstabilen Faserverbund zu bilden und die während einer Benutzung der Gelenkgabel 1 üblicherweise auftretenden Querkräfte Q und Momentenstöße besser aufnehmen und zu den Gurten 11 abführen zu können.

Es können auch Faserverbundlaminate mit überkreuzend angeordneten Fasern 13 für die Herstellung der Gabelhälften 2, 3 verwendet werden, wie es in Fig. 3 angedeutet ist.

Bei dem in Figur 4 schematisch dargestellten Ausführungsbeispiel ist ein Gurt 11 schlaufenförmig um das Bolzenauge 9 des Gabelarms 8 verlegt und in den Randbereichen 10 des Gabelarms 8 verankert. Einzelne Fasern 12 sind um den Gurt 11 gewickelt, beziehungsweise zwischen beabstandet zueinander angeordneten Gurtabschnitten in diesen verankert. In einem an das Bolzenauge 9 angrenzenden Bereich sind die Fasern 12 enger benachbart und damit mit höherer Faserdichte als in anderen Bereichen des Gabelarms 8 angeordnet. Die Ausrichtung der Fasern 12 kann zumindest bereichsweise im Wesentlichen parallel, bzw. sich überkreuzend vorgegeben sein. Insbesondere im Bereich des Bolzenauges 9 können benachbarte Fasern 12 mit einer höheren Faserdichte in dem Matrixmaterial augeordnet sein und eine Konvergenz im Bereich des Bolzenauges 9, bzw. im Abstand dazu eine Aufspreizung benachbarter Fasern 12 aufweisen, was zu einer erhöhten Festigkeit und verbesserten Aufnahme von Querkräften Q und Drehmomentstößen im Bereich des Bolzenauges 9 führen kann.

## Patentansprüche

1. Gelenkgabel (1) aus Faserverbundwerkstoffen mit zwei beabstandet zueinander, im Wesentlichen parallel angeordneten Gabelarmen (8), die jeweils ein Bolzenauge (9) zur Aufnahme eines Bolzens eines Gelenkkreuzes aufweisen, wobei die Gelenkgabel (1) zwei gesondert herstellbare Gabelhälften (2, 3) aufweist, die jeweils einen Befestigungsbereich (4) zur Festlegung an einem Endbereich (5) einer Welle (6) aufweisen, **dadurch gekennzeichnet, dass** der Befestigungsbereich (4) jeder Gabelhälfte (2, 3) einen an die Abmessungen des Endbereichs (5) der Welle (6) angepassten Hohlzylinderabschnitt aufweist.

2. Gelenkgabel nach Anspruch 1, **dadurch gekennzeichnet, dass** der Befestigungsbereich (4) jeder Gabelhälfte (2, 3) eine Polygonhalbschale aufweist.

3. Gelenkgabel nach Anspruch 1 oder Anspruch 2, **dadurch gekennzeichnet, dass** die beiden Gabelhälften (2, 3) mittels eines die Befestigungsbereiche (4) der beiden Gabelhälften (2, 3) mindestens bereichsweise umgreifenden Spannrings (7) kraftschlüssig an dem Endbereich (5) der Welle (6) festlegbar sind.

4. Gelenkgabel nach einem der vorangehenden Ansprüche, **dadurch gekennzeichnet, dass** jede Gabelhälfte (2, 3) einen Gabelarm (8) aufweist.

5. Gelenkgabel nach einem der vorangehenden Ansprüche, **dadurch gekennzeichnet, dass** die beiden Gabelhälften (2, 3) eine spiegelsymmetrische Formgebung aufweisen.

6. Gelenkgabel nach einem der vorangehenden Ansprüche, **dadurch gekennzeichnet, dass** die beiden Gabelhälften (2, 3) eine identische Formgebung aufweisen.

7. Gelenkgabel nach einem der vorangehenden Ansprüche, **dadurch gekennzeichnet, dass** jede Gabelhälfte (2, 3) als Faserverbund-Biegeträger ausgestaltet ist, wobei in Randbereichen (10) des Gabelarms (8) Gurte (11) mit vorwiegend unidirektionaler Faseranordnung ausgebildet sind.

8. Gelenkgabel nach Anspruch 7, **dadurch gekennzeichnet, dass** die Gurte (11) einer Gabelhälfte (2, 3) mittels Fasern (12, 13) miteinander kraftübertragend verbunden sind.

9. Gelenkgabel nach Anspruch 7 oder Anspruch 8, **dadurch gekennzeichnet, dass** ein Gurt (11) oder mehrere Gurte (11) einer Gabelhälfte (2, 3) schlaufenförmig um das Bolzenauge (9) geführt und in Randbereichen (10) des Gabelarms (8) verankert sind.

10. Gelenkgabel nach einem der vorangehenden Ansprüche, **dadurch gekennzeichnet, dass** die Fasern (12) schlaufenförmig um das Bolzenauge (9) des Gabelarms (8) verlaufen und in Randbereichen (10) des Gabelarms (8) verankert sind.

11. Gelenkgabel nach einem der vorangehenden Ansprüche, **dadurch gekennzeichnet, dass** mindestens ein Gurt (11) schlaufenförmig das Bolzenauge (9) vollständig umschlingt.

## Claims

1. Joint yoke (1) made of fibrous compound materials with two yoke arms (8) which, spaced apart from one another, are arranged essentially parallel and which have in each case a bolt eye (9) for receiving a bolt of a universal joint, the joint yoke (1) having two separately producible yoke halves (2, 3) which have in each case a fastening region (4) for securing to an end region (5) of a shaft (6), **characterized in that** the fastening region (4) of each yoke half (2, 3) has a hollow-cylindrical portion adapted to the dimensions of the end region (5) of the shaft (6).

2. Joint yoke according to Claim 1, **characterized in that** the fastening region (4) of each yoke half (2, 3) has a polygonal half-shell.

3. Joint yoke according to Claim 1 or Claim 2, **characterized in that** the two yoke halves (2, 3) are securable non-positively to the end region (5) of the shaft (6) by means of a tension ring (7) which at least in regions surrounds the fastening regions (4) of the two yoke halves (2, 3).

4. Joint yoke according to one of the preceding claims, **characterized in that** each yoke half (2, 3) has a yoke arm (8).

5. Joint yoke according to one of the preceding claims, **characterized in that** the two yoke halves (2, 3) have mirror-symmetrical shaping.

6. Joint yoke according to one of the preceding claims, **characterized in that** the two yoke halves (2, 3) have identical shaping.

7. Joint yoke according to one of the preceding claims, **characterized in that** each yoke half (2, 3) is configured as a composite-fibre bend sustainer, webbings (11) with a predominantly unidirectional fibre arrangement being, formed in marginal regions (10) of the yoke arm (8).

8. Joint yoke according to Claim 7, **characterized in that** the webbings (11) of a yoke half (2, 3) are connected to one another in a force-transmitting manner by means of fibres (12, 13).

9. Joint yoke according to Claim 7 or Claim 8, **characterized in that** a webbing (11) or a plurality of webbings (11) of a yoke half (2, 3) is or are led in loop form around the bolt eye (9) and anchored in marginal regions (10) of the yoke arm (8).

10. Joint yoke according to one of the preceding claims, **characterized in that** the fibres (12) run in loop form around the bolt eye (9) of the yoke arm (8) and are anchored in marginal regions (10) of the yoke arm (8).

11. Joint yoke according to one of the preceding claims, **characterized in that** at least one webbing (11) is wrapped in loop form completely around the bolt eye (9).

## Revendications

1. Fourche articulée (1) constituée de matériaux composites fibreux, comprenant deux bras de fourche (8) espacés l'un de l'autre, disposés essentiellement parallèlement, qui présentent chacun un alésage de boulon (9) pour recevoir un boulon d'un croisillon, la fourche articulée (1) présentant deux moitiés de fourche (2, 3) pouvant être fabriquées séparément, qui présentent chacune une région de fixation (4) pour la fixation à une région d'extrémité (5) d'un arbre (6), **caractérisée en ce que** la région de fixation (4) de chaque moitié de fourche (2, 3) présente une portion cylindrique creuse adaptée aux dimensions de la région d'extrémité (5) de l'arbre (6).

2. Fourche articulée selon la revendication 1, **caractérisée en ce que** la région de fixation (4) de chaque moitié de fourche (2, 3) présente une demi-coque polygonale.

3. Fourche articulée selon la revendication 1 ou la revendication 2, **caractérisée en ce que** les deux moitiés de fourche (2, 3) peuvent être fixées par engagement par force au niveau de la région d'extrémité (5) de l'arbre (6) au moyen d'une bague de serrage (7) venant en prise au moins en partie autour des régions de fixation (4) des deux moitiés de fourche (2, 3).

4. Fourche articulée selon l'une quelconque des revendications précédentes, **caractérisée en ce que** chaque moitié de fourche (2, 3) présente un bras de fourche (8).

5. Fourche articulée selon l'une quelconque des revendications précédentes, **caractérisée en ce que** les deux moitiés de fourche (2, 3) présentent une forme ayant une symétrie spéculaire.

6. Fourche articulée selon l'une quelconque des revendications précédentes, **caractérisée en ce que** les deux moitiés de fourche (2, 3) présentent une forme identique.

7. Fourche articulée selon l'une quelconque des revendications précédentes, **caractérisée en ce que** chaque moitié de fourche (2, 3) est configurée sous forme de support de flexion composite renforcé par des fibres, des sangles (11) étant réalisées avec un agencement de fibres essentiellement unidirectionnel dans les régions de bord (10) du bras de fourche (8).

8. Fourche articulée selon la revendication 7, **caractérisée en ce que** les sangles (11) d'une moitié de fourche (2, 3) sont connectées par transfert de force les unes aux autres au moyen de fibres (12, 13).

9. Fourche articulée selon la revendication 7 ou la revendication 8, **caractérisée en ce qu'**une sangle (11) ou plusieurs sangles (11) d'une moitié de fourche (2, 3) sont guidées en forme de boucle autour de l'alésage de boulon (9) et sont ancrées dans des régions de bord (10) du bras de fourche (8).

10. Fourche articulée selon l'une quelconque des revendications précédentes, **caractérisée en ce que** les fibres (12) s'étendent en forme de boucle autour de l'alésage de boulon (9) du bras de fourche (8) et sont ancrées dans des régions de bord (10) du bras de fourche (8).

11. Fourche articulée selon l'une quelconque des revendications précédentes, **caractérisée en ce qu'**au moins une sangle (11) entoure complètement en forme de boucle l'alésage de boulon (9).
